# EUROPEAN PATENT SPECIFICATION

(11) **EP 0 307 823 B1**
(45) Date of publication and mention of the grant of the patent: **29.03.1995**
(21) Application number: 88114796.1
(22) Date of filing: 09.09.1988
(51) Int. Cl.: B23C 3/34, B23B 29/03, B23B 51/00

(54) **A bottle boring milling tool**
Flaschenbohrfräswerkzeug
Outil de fraisage à chanfreiner intérieurement

(30) Priority: 17.09.1987 US 97971
(43) Date of publication of application: 22.03.1989
(73) Proprietor: VALENITE INC., Troy Michigan 48007-3950 (US)
(72) Inventor: Beck, Hans W., D-6920 Sinsheim 3 (DE); Nikstat, Siegmar, D-6920 Sinsheim (DE)
(74) Representative: Grünecker, Kinkeldey, Stockmair & Schwanhäusser Anwaltssozietät

(56) References cited:
- DE-A- 2 022 226
- GB-A- 2 048 135
- US-A- 2 166 923

## Description

The present invention relates to the field of bottle boring tools and more particularly to milling tools utilizing a milling cutter radially offset from the boring bar.

### Background of the Invention

The invention relates to a tool for a numerically controlled machine tool for machining a bore in a workpiece, the tool comprising a boring bar rotatable and axially displaceable relative to the workpiece and a milling cutter rotatably mounted in the boring bar, the milling cutter having an axis of rotation radially offset with respect to the axis of the boring bar.

A tool of this type is disclosed in an article "Fräsbohren und andere Bohrtechnologien" in the periodical "tz für Metallbearbeitung", 81st annual, 1987, issue 3/87, pages 21, 22. The "bottle boring milling" tool shown therein comprises a rotating milling cutter mounted to the forward end of the stationary boring bar such that the milling cutter removes material from the workpiece in the area of the bore center when the boring bar is moved into the rotating workpiece. The boring cutting edge provided at the boring bar provides for the finish-machining. One advantage of this device which combines milling and boring operations resides in the fact that relatively short chips result ensuring good chip control. Furthermore, sufficiently high cutting speeds across the whole bore bottom are obtained. However, this bore milling tool is not capable of making profiled bores, i.e., bottle bores.

Applicant's German patent application 34 10 967 discloses a tool for making enlarged profiled bores. The application discloses a tool which comprises a rotating boring head having a plurality of circumferentially spaced cutting members adapted to be radially adjusted during the cutting operation by means of a single adjusting device. The tool involves merely a boring operation providing relatively long chips which may cause problems as to chip control. This may detrimentally affect both operational reliability and service life. From GB-A-2048135 which is considered to represent the most relevant prior art there is known a milling apparatus for widening drill holes and perforations. Said known milling apparatus comprises an interior body in which there is excentrically mounted the shaft of a milling cutter and which, in turn, is excentrically mounted in an exterior body. By rotating these two bodies relatively to one another, the cutter may be located concentrically for insertion into or removal from a drill hole or located excentrically of the drill hole to cut into the wall thereof and produce the desired widening.

It is a primary object of the present invention to provide a tool adapted to make enlarged profiled bores while ensuring good chip control.

The above object is achieved by the subject matter of the patent claim.

To this end, in a tool of the above-defined type the milling cutter is mounted for radial movements relative to the boring bar.

The milling cutter has cutting edges facing in the direction of removal of the boring bar and radially projecting beyond the outer periphery of the boring bar when the milling cutter is in its operative position.

The tool of the present invention allows both for axial and radial movements of the cutting edges of the milling cutter along a pair of NC axes. Said axial movements result from axial movements of the boring bar while said radial movements result from radial movements of the milling cutter relative to the boring bar. The tool is adapted to follow a profiled contour when the boring bar is removed from a preformed bore of the workpiece, with the milling cutter providing for the finish-machining of the profiled bore. Using a milling cutter results in relatively short chips ensuring good chip control. High operational reliability and long service life result therefrom.

Preferably, the boring bar is stationary while the workpiece rotates. However, relative movement between the boring bar and the workpiece could be obtained by making the boring bar rotate and holding the workpiece stationary.

As indicated in the patent claim the radial movements of the milling cutter relative to the boring bar are obtained by means of an excentric spindle having an axis of rotation radially offset relative to the axis of the boring bar and rotatable in the boring bar.

An example of the invention will now be described with reference to the drawings, in which:
- Fig. 1: is a longitudinal cross section of a bottle boring milling tool for making an enlarged profiled bore according to an embodiment of the present invention;
- Fig. 2: is a transverse cross section of the tool of Fig. 1;
- Fig. 3: shows various shapes of bores which may be formed by the tool of Fig. 1 and 2.

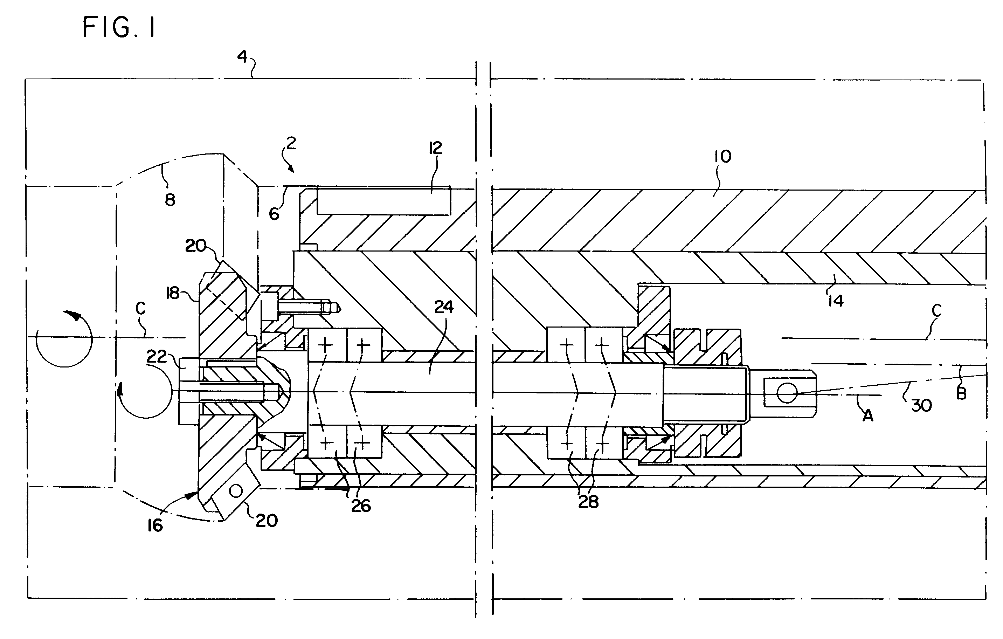

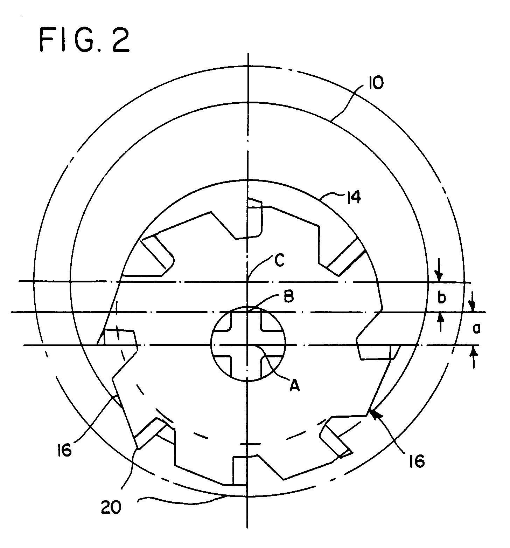

Tool 2, shown in Fig. 1 and 2, is adapted to machine a bore in a workpiece 4 schematically shown in Fig. 1 by dash-dotted lines. More precisely, tool 2 serves to enlarge a preformed cylindrical bore 6 such that it obtains a profiled contour.

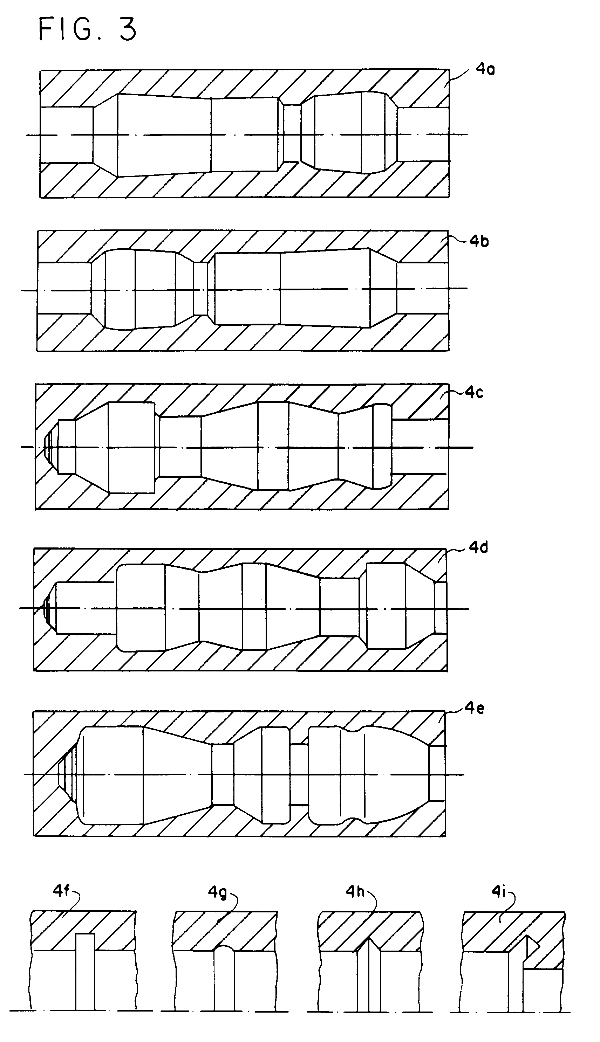

For explanatory purposes a plurality of workpieces 4a to 4i having differently shaped bores which may be machined by tool 2 of Fig. 1, 2 are shown in Fig. 3.

Tool 2 comprises a boring bar 10 provided with a plurality of circumferentially spaced guide members 12 for guiding boring bar 10 in cylindrical bore 6. Workpiece 4 and boring bar 10 are rotatable and axially displaceable relative to each other. Preferably, boring bar 10 is stationary while workpiece 4 rotates; as an alternative workpiece 4 could be stationary while boring bar 10 rotates.

An excentric spindle 14 is rotatably mounted in an excentric bore of boring bar 10. Excentric spindle 14 excentrically receives a milling cutter 16.

Milling cutter 16 comprises a milling head 18 projecting from the forward end of boring bar 10 and excentric spindle 14, and including a plurality of circumferentially spaced cutting members 20 provided with cutting edges facing away from the forward end of tool 2 (to the right in Fig. 1). Milling head 18 is fixed by means of a bolt 22 to a drive spindle 24 which is excentrically mounted in excentric spindle 14 by means of bearings 26 and 28. Drive spindle 24 is connected via a (schematically indicated) cardan shaft 30 to a drive shaft (not shown) which is rotatably driven by a drive (also not shown).

As may be seen from Fig. 1 and 2, the axis A of drive spindle 24 and accordingly the axis of rotation of milling cutter 16 are radially offset relative to the axis of B of excentric spindle 14 by a distance a, while axis B is radially offset relative to the axis C of boring bar 10 by a distance b as is shown in Fig. 2. If excentric spindle 14 is rotated by adjusting means (not shown) in boring bar 10, the radial spacing between the axis of rotation a of milling cutter 16 and the axis C or boring bar 10 is changed; i.e., the cutting edges of milling cutter 16 are radially displaced relative to axis C or boring bar 10.

Operation of the tool as described is as follows: Initially milling cutter 16 is moved into its radially innermost position; to this end excentric spindle 14 is rotated by the adjusting means (not shown) in boring bar 10. Thereafter boring bar 10, together with milling cutter 16, are moved into the performed cylindrical bore 6 of tool 4. Workpiece 4 and milling cutter 16 are driven such that they rotate about their axes C and A, respectively. In order to have milling cutter 16 from the profiled contour 8 both axial and radial movements of milling head 18 are required. To this end, boring bar 10, together with milling cutter 16, is moved in the direction of removal from bore 6 (to the right in Fig. 1) and simultaneously excentric spindle 14 is rotated by the adjusting means (not shown) so that milling head 16 performs a radially outward movement relative to boring bar 10. In this manner, a profiled contour 8 is machined into workpiece 4.

## Claims

1. A tool for numerically controlled machine tools for machining a bore in a workpiece, said tool comprising:
a boring bar (10) provided with a plurality of circumferentially spaced guide members (12), wherein said boring bar is rotatable and axially displaceable relative to the workpiece, and further comprising a milling cutter (16) rotatably mounted in the boring bar, said milling cutter having a axis (A) of rotation radially offset with respect to the axis (C) of the boring bar, said milling cutter (16) is mounted for radial movements relative to the boring bar
- wherein the milling cutter (16) has cutting edges facing in the direction of removal of the boring bar and radially projecting beyond the outer diameter of the boring bar when the milling cutter is in its operative position,
- wherein the milling cutter is mounted in an excentric spindle (14) having an axis (B) which is radially offset with respect to the axis (C) of the boring bar (10) and which is rotatable in the boring bar to cause said radial movements of the milling cutter, and
- wherein the milling cutter (16) includes a drive spindle (24) excentrically mounted in said excentric spindle (14), which drive spindle is connected to a drive shaft concentric to said excentric spindle by means of a cardan shaft (30).

## Patentansprüche

1. Werkzeug für numerisch gesteuerte Werkzeugmaschine zur Herstellung einer Bohrung in einem Werkstück, wobei das Werkzeug umfaßt:
eine mit einer Mehrzahl über den Umfang beabstandeter Führungselemente (12) versehene Bohrstange (10), wobei die Bohrstange drehbar und axial relativ zum Werkstück verstellbar ist, und desweiteren umfassend eine drehbar in der Bohrstange befestigte Fräsvorrichtung (16), wobei die Fräsvorrichtung eine Rotationsachse (A) aufweist, die radial bezüglich einer Achse (C) der Bohrstange versetzt ist, wobei die Fräsvorrichtung (16) für Radialbewegungen relativ zur Bohrstange befestigt ist,
- wobei die Fräsvorrichtung (16) Schneidkanten aufweist, die in Rückzugsrichtung der Bohrstange liegen und sich radial über den äußeren Durchmesser der Bohrstange erstrecken, wenn die Fräsvorrichtung in Betriebsposition ist,
- wobei die Fräsvorrichtung in einer exzentrischen Spindel (14) befestigt ist, die eine Achse (B) aufweist, die bezüglich der Achse (C) der Bohrstange (10) radial versetzt ist und die in der Bohrstange drehbar ist, um die Radialbewegungen der Fräsvorrichtung hervorzurufen, und
- wobei die Fräsvorrichtung (16) eine Antriebsspindel (24) umfaßt, die exzentrisch in der exzentrischen Spindel (14) befestigt ist, wobei die Antriebsspindel mit einer Antriebswelle verbunden ist, die mittels einer Kardanwelle (30) konzentrisch zur exzentrischen Spindel ist.

## Revendications

1. Outil pour machine outil à commande numérique pour usiner un alésage dans une pièce, le dit outil comprenant :
un arbre d'alésage (10) pourvu d'une pluralité d'éléments de guidage (12) espacés circonférentiellement, dans lequel le dit arbre d'alésage est rotatif et déplaçable axialement par rapport à la pièce à usiner, et comprenant, en outre, une fraise (16) montée à rotation dans l'arbre d'alésage, la dite fraise présentant un axe (A) de rotation radialement décalé par rapport à l'axe (C) de l'arbre d'alésage, la dite fraise (16) est montée pour des mouvements radiaux par rapport à l'arbre d'alésage,
dans lequel la fraise (16) a des bords de coupe en regard de la direction d'enlèvement de l'arbre d'alésage et faisant saillie radialement au-delà du diamètre extérieur de l'arbre d'alésage lorsque la fraise est en sa position de travail,
dans lequel la fraise est montée dans une fusée excentrée (14) ayant un axe (B) qui est décalé axialement par rapport à l'axe (C) de l'arbre d'alésage (10) et qui est rotatif à l'intérieur de l'arbre d'alésage pour provoquer les dits mouvements radiaux de la fraise, et
dans lequel la fraise (16) comprend un arbre de commande (24) monté de façon excentrée dans la dite fusée excentrée (14), l'arbre de commande étant connecté à un axe de commande concentrique à la dite fusée excentrique au moyen d'un cardan (30).
